# EUROPEAN PATENT APPLICATION

(11) **EP 3 412 564 A1**
(43) Date of publication of application: **12.12.2018**
(21) Application number: 16877305.9
(22) Date of filing: 02.08.2016
(51) Int. Cl.: B64C 25/10, B64C 1/30

(54) **AIRCRAFT SUPPORT LEG, AIRCRAFT AND CONTROL METHOD**

(30) Priority: 25.12.2015 CN 201510997626; 03.03.2016 CN 201610121438
(71) Applicant: Powervision Robot Inc., Beijing 100191 (CN)
(72) Inventor: ZHENG, Weifeng, Beijing 100191 (CN); JIA, Chunhong, Beijing 100191 (CN); ZHENG, Yi, Beijing 100191 (CN); WEI, Buwei, Beijing 100191 (CN); ZENG, Guozhi, Beijing 100191 (CN)
(74) Representative: Casalonga
(86) International application number: PCT/CN2016/092978
(87) International publication number: WO 2017/107493

(57) **Abstract**

An aircraft support leg (2), the support leg (2) being movably connected to a main body of an aircraft. The support leg (2) can rotate to at least a first position and a second position. At the first position, an angle is provided between the support leg and the main body of the aircraft, and at the second position, the support leg (2) substantially abuts against the main body of the aircraft or is at least partly arranged in the main body of the aircraft. Such a support leg is convenient for the storage of the aircraft. Also disclosed are a control method for said support leg and an aircraft having said support leg and a control method for the aircraft.

## Description

### BACKGROUND OF THE INVENTION

### FIELD OF THE INVENTION

The present invention relates to the field of aircrafts, and more particularly, to an aircraft leg, an aircraft and a control method.

### DESCRIPTION OF THE PRIOR ART

Aircrafts or unmanned aircrafts are currently more and more extensively applied in social life to perform close-distance observation or perform high-altitude photographing at locations hard to reach by men, thus providing convenience for observation and photographing.

A current aircraft often consists of an aircraft body and an arm extending outwards from the aircraft body towards outer directions. An outer end portion of the arm is installed with a motor and a propeller for driving flight of the aircraft. A lower part of the aircraft is provided with a support leg for facilitating landing of the aircraft.

However, in a current aircraft, the extended arm and support legs are connected to an aircraft body in a fixed manner. When not in use, the extended arm demands higher storage requirements on the storage space of the aircraft. Meanwhile, due to the consideration of weight reduction of the aircraft, structures of various parts in the aircraft are also relatively simple. As a result, the extended arm causes susceptibility to breakage risks if improperly stored.

Therefore, it is an important research direction to design an aircraft with easy storage when the aircraft is not in use. Meanwhile, to realize such aircraft, novel designs for an aircraft framework mechanism, an aircraft arm locking and driving mechanism for realizing extension and stowing of an aircraft arm, an aircraft arm, and an aircraft support leg driving mechanism for realizing extension and stowing of an aircraft support leg all need to be developed.

In view of the above, the present invention is provided.

### SUMMARY OF THE INVENTION

The technical problem to be solved by the present invention is to improve shortcomings of the prior art and to provide an aircraft support leg, an aircraft and a control method to realize automatic extension and stowing of an aircraft support leg, so as to overcome issues of inconvenient storage and flight control caused by extension and stowing incapability of an existing aircraft support leg.

To solve the above technical problems, a fundamental concept of a technical solution adopted by the present invention is as follows.

An aircraft support leg is provided. The aircraft support leg is movably connected to a main body of the aircraft. The aircraft support leg can rotate to at least a first position and a second position. At the first position, an angle is between the aircraft support leg and the main body of the aircraft; at the second position, the aircraft support leg substantially abuts against the main body of the aircraft or is at least partially arranged in the main body of the aircraft.

Further, a long axis of the main body of the aircraft is parallel to or coincides with an axis of center of gravity of the main body of the aircraft. A free end of the support leg has a degree of freedom in an angular change relative to the axis of center of gravity of the main body of the aircraft.

Further, at the first position, an angle from 0 degree to less than 90 degrees is provided between a virtual extension line of a central axis of the aircraft support leg and the axis of center of gravity of the main body of the aircraft; at the second position, the free end of the aircraft support leg is higher than a connecting end between the aircraft support leg and the main body of the aircraft.

Further, a cross section of the main body of the aircraft is a regular pattern axially symmetrical to the axis of center of gravity of the main body of the aircraft; preferably, the cross section of the main body of the aircraft is a convex polygon.

Further, a shape of the main body of the aircraft is smooth transitional closed curve enveloped surface; preferably, the shape of the main body of the aircraft is an ellipsoid sphere having a long axial direction parallel to or coinciding with an axis of center of gravity of an unmanned aircraft and having a smooth closed curve enveloped surface.

Further, a housing of the main body of the aircraft has a groove or recess at least partially adapted to the aircraft support leg; preferably, the housing of the main body of the aircraft has a groove or recess adapted to the aircraft support leg, and the aircraft support leg is at least partially arranged in the groove or recess of the housing of the main body of the aircraft.

Further, one side portion of the aircraft support leg has a smooth transitional curve similar to that of the housing of the main body of the aircraft; the groove or the recess can entirely accommodate the aircraft support leg when the support leg is at the second position, such that the support leg and the housing of the main body of the aircraft jointly form the shape as a smooth transitional closed curve enveloped surface.

Further, the support leg has a locking device, which keeps the free end of the aircraft support leg when the aircraft support leg is at the first position.

Further, a support leg control module is included. The support leg control module controls an aircraft support leg drive motor to extend the aircraft support leg after receiving a support leg extension instruction, controls the aircraft support leg drive motor to stop extending the aircraft support leg when the aircraft support leg is extended to a supporting position, controls the aircraft support leg drive motor to stow the aircraft support leg after receiving a support leg stowing instruction, and controls the aircraft support leg drive motor to stop stowing the aircraft support leg when the aircraft support leg is stowed to a stowed position.

The aircraft support leg drive motor is further included. The aircraft support leg drive motor is installed at the framework of the aircraft, and is for extending or stowing the aircraft support leg under the control of the support leg control module.

Further, the aircraft support leg control system further includes an aircraft support leg locking motor and an aircraft support leg locking mechanism. The support leg control module further controls, after extending the aircraft support leg is stopped, the aircraft support leg locking motor to drive the aircraft support leg locking mechanism to lock the aircraft support leg at the supporting state; the aircraft support locking motor further drives, under the control of the support leg control module, the aircraft support leg locking mechanism to lock the aircraft support leg at the supporting state.

Further, the support leg control module further controls, after receiving the support leg stowing instruction and before controlling the aircraft support leg drive motor to stow the aircraft support leg, the aircraft support leg locking motor to drive the aircraft support leg locking mechanism to unlock the aircraft support leg; the aircraft support leg locking motor further drives, under the control of the support leg control module, the aircraft support leg locking mechanism to unlock the aircraft support leg.

Further, the aircraft support leg control system further includes a first micro switch. The first micro switch is installed at the framework of the aircraft and is electrically connected to the support leg control module. When the aircraft support leg is extended to the supporting position, the aircraft support leg triggers the first micro switch, such that the first micro switch sends a first feedback signal to the support leg control module. The support leg control module determines, after receiving the first feedback signal, that the aircraft support leg is extended to the supporting position.

Further, the aircraft support leg control system further includes a second micro switch. The second micro switch is installed at the framework of the aircraft and is electrically connected to the support leg control module. When the aircraft support leg is stowed to the stowed position, the aircraft support leg triggers the second micro switch, such that the second micro switch sends a second feedback signal to the support leg control module. The support leg control module determines, after receiving the second feedback signal, that the aircraft support leg is stowed to the stowed position.

Further, the aircraft support leg control system further includes: a potentiometer. The potentiometer is installed at the framework of the aircraft, and a rotation button of the potentiometer is coaxial with a shaft of the aircraft support leg driver motor and synchronously rotates with the shaft. The potentiometer sends a third feedback signal to the support leg control module when the aircraft support leg is extended to the supporting position, and sends a fourth feedback signal to the support leg control module when the aircraft support leg is stowed to the stowed position. The support leg control module determines, after receiving the third feedback signal, that the aircraft support leg is extended to the supporting position, and determines, after receiving the fourth feedback signal, that the aircraft support leg is stowed to the stowed position.

Further, the support leg extension instruction and the support leg stowing instruction are sent by a flight control module of the aircraft. The aircraft support leg control system further includes a height detection module. The height detection module detects a flight altitude of the aircraft, and sends the flight altitude of the aircraft to the flight control module. The flight control module performs determination on the flight altitude of the aircraft. When the flight altitude of the aircraft is lower than a predetermined altitude, the flight control module sends the support leg extension instruction to the support leg control module; when the flight altitude of the aircraft is higher than the predetermined altitude, the flight control module sends the support leg stowing instruction to the support leg control module.

Further, the support leg extension instruction and the support leg stowing instruction are sent by the flight control module of the aircraft. The aircraft support leg control system further includes: a support leg remote control module, which sends by remote control a support leg extension command and a support leg stowing command to the flight control module. The flight control module sends the support leg extension instruction to the support leg control module after receiving the support leg extension command, and sends the support leg stowing instruction to the support leg control module after receiving the support leg stowing command.

An aircraft is further provided. The aircraft includes a main body of the aircraft and an aircraft support leg rotatably disposed thereon. A cross section of the main body of the aircraft is an enclosed curve. A first distance between a first point on the main body of the aircraft and an axis of center of gravity of the aircraft is different from a second distance between a second point on the main body of the aircraft and the axis of center of gravity of the aircraft.

Further, a cross section of the main body of the aircraft is an axially symmetrical regular closed curve, the cross sections of the main body of the aircraft along the axial direction of center of gravity of the aircraft are similar geometric shapes. Preferably, the cross section of the main body of the aircraft is a convex polygon; more preferably,

Further, the shape of the main body of the aircraft is a partially ellipsoidal sphere or an ellipsoidal sphere having a long axis and a short axis and having a smooth closed curve enveloped surface, wherein the long axis coincides with the axis of center of gravity of the main body of the aircraft.

Further, the aircraft support leg is rotatably disposed on the main body of the aircraft below the middle, i.e., 1/2, of the axis of center of gravity of the main body of the aircraft. The housing of the main body of the aircraft has the groove or recess at least partially adapted to the aircraft support leg and configured along a direction of the central axis of the main body of the aircraft.

Further, a connecting end of the aircraft support leg can be rotatably disposed at one end portion near the groove or recess. A free end of the aircraft support leg in one state can be stowed and be close to the other end portion of the groove or recess. The connecting end is disposed on the main body of the aircraft below the middle, i.e., 1/2, of the central axis of the main body of the aircraft.

Further, the aircraft support leg has a smooth curve similar to the outer surface of the main body of the aircraft, so as to facilitate the aircraft support leg to be at least partially or entirely embedded into the groove or recess when the aircraft support leg is in a stowed state.

Further, when a distance threshold of the aircraft from a surface is equal to or greater than a predetermined value, the aircraft support leg rotates around the connecting end, and the free end of the aircraft support leg moves out of a photographing field of view of a camera of the aircraft.

A control method of an aircraft support leg is further provided. The aircraft support leg is rotatably disposed on or in a main body of the aircraft. The control method includes a step of controlling and stowing the aircraft support leg, wherein the step of stowing the aircraft support leg is: controlling and rotating the aircraft support leg from a first position, at which an angle is between the aircraft support leg and the main body of the aircraft so as to support the aircraft to have a distance from a surface, to a second position, at which the aircraft support leg is stowed and substantially abuts against a housing of the main body of the aircraft, or the aircraft support leg is at least partially arranged in the housing of the aircraft.

Further, when the aircraft support leg is at the second position, a free end of the aircraft support leg is controlled to be higher than a connecting end between the aircraft support leg and the main body of the aircraft.

Further, a step of controlling and extending the aircraft support leg is further included, wherein the step of extending the aircraft support leg is extending the aircraft support leg from the second position to a first position, at which an angle is between the aircraft support leg and the main body of the aircraft so as to support the aircraft to have a distance from a surface.

Further, before executing the step of extending the aircraft support leg, the control method further includes determining a distance of the aircraft from a surface, and the step of controlling and extending the aircraft support leg is executed when a threshold of the distance of the aircraft from the surface is lower than or equal to a predetermined value.

Further, a locking step is included. The locking step is executed after the step of extending the aircraft support leg and is for controlling a locking mechanism to lock the aircraft support leg at the first position.

Further, a step of unlocking the support leg is further included before executing the step of stowing the aircraft support leg. The unlocking step includes controlling and unlocking the aircraft support leg from the first position, at which an angle is between the aircraft support leg and the main body of the aircraft so as to support the aircraft to having a distance from a surface.

Further, when the aircraft support leg is at the second position, the aircraft support leg is controlled to rotate to jointly form a smooth closed curve enveloped surface with the housing of the main body of the aircraft.

Further, when the aircraft support leg is at the second position, the aircraft support leg is controlled to rotate to be partially embedded into a groove or recess configured on the housing of the main body of the aircraft and along a direction of a central axis of the main body of the aircraft, so as to jointly form a shape similar to a polygon, a circle or an ellipsoid with the housing of the main body of the aircraft, wherein a long axis of the ellipsoid is parallel to or coincides with the axis of center of gravity of the main body of the aircraft.

Further, the step of stowing the aircraft support leg is: a support leg control module controlling, after receiving a support leg stowing instruction, an aircraft support leg drive motor to stow the aircraft support leg; and the support leg control module controlling the aircraft support leg drive motor to stop stowing the aircraft support leg when the aircraft support leg is stowed to the stowed position.

Further, the step of extending the aircraft support leg is: the support leg control module controlling, after receiving a support leg extension instruction, the aircraft support leg drive motor to extend the aircraft support leg; and the support leg control module controlling the aircraft support leg drive motor to stop extending the aircraft support leg when the aircraft support leg is extended to the supporting position.

further includes: the support leg control module controlling an aircraft support leg locking motor to drive an aircraft support leg locking mechanism to lock the aircraft support leg at the supporting state.

Further, in the step of stowing the aircraft support leg, after the support leg control module receives the support leg stowing instruction and before the aircraft support leg drive motor is controlled to stow the aircraft support leg, the step of stowing the aircraft support leg further includes: the support leg control module controlling the aircraft support leg locking motor to drive the aircraft support leg locking mechanism to unlock the aircraft support leg.

Further, in the step of extending the aircraft support leg, the support leg control module determines that the aircraft support leg is extended to the supporting position by using feedback from a first micro switch triggered when the aircraft support leg is extended to the supporting position.

Further, in the step of stowing the aircraft support leg, the support leg control module determines that the aircraft support leg is stowed to the stowed position by using feedback from a micro switch triggered when the aircraft support leg is stowed to the stowed position.

Further, the support leg control modules determine that the aircraft support leg is extended to the supporting position or stowed to the stowed position by using a rotation button, which is disposed coaxially with a shaft of the aircraft support leg drive motor and synchronously rotates with the shaft and a signal fed back by a potentiometer having the rotation button.

Further, the control method of an aircraft support leg further includes: detecting a flight altitude of the aircraft; sending the support leg extension instruction to the support leg control module when the flight altitude of the aircraft is lower than a predetermined altitude; and sending the support leg stowing instruction to the support leg control module when the flight altitude of the aircraft is higher than the predetermined altitude.

A control method of an aircraft is provided, wherein the aircraft includes a main body of the aircraft and an aircraft support leg rotatably disposed thereon. The control method of an aircraft includes the following steps.

In step (1), the aircraft starts descending under the control of an energy storage component.

In step (2), during the landing process and when landed, the aircraft support leg is controlled to rotate from a second position, at which the aircraft support leg is near the main body of the aircraft, to a first position, at which a virtual plane formed by a free end of the aircraft support leg is at the bottom part of the main body of the aircraft and a distance is spaced between the two.

Further, the aircraft support leg is controlled to rotate from a second position, at which the aircraft support leg is stowed and substantially abuts against the main body of the aircraft, or the aircraft support leg is at least partially arranged in the main body of the aircraft, to the first position. Preferably, the aircraft support leg is controlled to rotate from a second position, at which the free end of the aircraft support leg is higher than a connecting end between the aircraft support leg and the main body of the aircraft and/or the free end of the aircraft support leg is higher than the bottom part of the main body of the aircraft, to the first position.

Further, the aircraft support leg is controlled to rotate from a second position, at which the aircraft support leg substantially abuts against the main body of the aircraft in form of a partially ellipsoidal sphere or an ellipsoidal sphere having a long axis and a short axis and having a smooth closed curve enveloped surface, or the aircraft support leg is at least partially arranged in the main body of the aircraft in form of a partially ellipsoidal sphere or an ellipsoidal sphere having a long axis and a short axis and having a smooth closed curve enveloped surface, to the first position.

With the above technical solutions, the present invention provides following effects compared to the prior art.

The aircraft support leg control method and system of the present invention achieve automatic extension and stowing of an aircraft support leg. From one aspect, because of the automatic extension and stowing, the aircraft support leg can be stored for easily storage when not in use, solving the problem of extension and stowing incapability of a fixed support leg of a current aircraft. From another aspect, when an aircraft is airborne, the aircraft support leg can be automatically stowed in a way that the stowed aircraft support leg does not protrude out of the main body of the aircraft, such that tasks such as aerial photographing and detection of the aircraft are not interfered. Further, as the present invention enables the aircraft support leg to be automatically extended, and further with the altitude feedback of an altitude detection module or remote control of a remote controller in the present invention, the aircraft is able to timely and automatically extend the aircraft support leg to the supporting position before landing, further providing reliable guarantee for stable support for landing of the aircraft.

Detailed description is further given in the embodiments of the present invention with the accompanying drawings below.

### BRIEF DESCRIPTION OF THE DRAWINGS

The accompanying drawings are a part of the present application, and are for providing further understanding of the present invention. The illustrative embodiments and the description thereof of the present invention are for explaining the present invention and are not to be construed as inappropriate definitions to the present invention. It is obvious that the accompanying drawings below depict merely some embodiments, and other accompanying drawings can be derived from these accompanying drawings by a person skilled in the art without involving inventive skills.

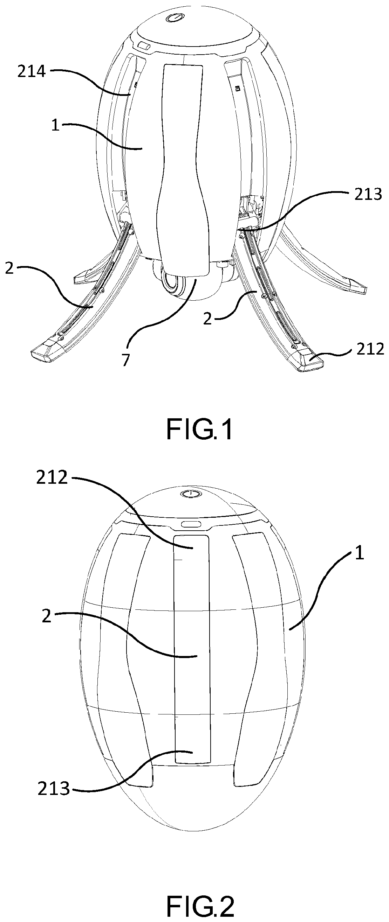

FIG. 2 is a structural schematic diagram of a support leg of the present invention at a second position;
FIG. 3 is a process schematic diagram of control steps of the present invention;
FIG. 4 is a schematic diagram of an aircraft adopted according to an embodiment of the present invention;
FIG. 5 is a structural schematic diagram of an aircraft support leg drive mechanism adopted according to an embodiment of the present invention;
FIG. 6 is a structural schematic diagram of another aircraft support leg drive mechanism adopted according to an embodiment of the present invention;
FIG. 7 is a structural schematic diagram of an aircraft support leg adopted according to an embodiment of the present invention;
FIG. 8 is a process schematic diagram according to an embodiment of the present invention;
FIG. 9 is a process schematic diagram according to another embodiment of the present invention;
FIG. 10 is a process schematic diagram according to another embodiment of the present invention;
FIG. 11 is a schematic diagram of a specific application corresponding to the embodiment in FIG. 9 according to an embodiment of the present invention; and
FIG. 12 is a schematic diagram of a specific application corresponding to the embodiment in FIG. 10 according to an embodiment of the present invention.

Numerical labels of the drawings: 1-housing; 2-aircraft support leg; 21-support leg rotation shaft; 211-limiting surface; 212-free end; 213-connecting end; 214-groove; 22-first aircraft support leg; 23-second aircraft support leg; 24-third aircraft support leg; 25-fourth aircraft support leg; 201-motor; 202-support leg rotation shaft; 203-worm gear;204-worm shaft; 3-arm; 4-framework; 5-support leg drive mechanism; 51-support leg control module; 511-steering gear; 512-gear set; 5121-first transmission gear; 5122-second transmission gear; 52-aircraft support leg drive motor; 521-first aircraft support leg drive motor; 522-second aircraft support leg drive motor; 523-third aircraft support leg drive motor; 524-fourth aircraft support leg drive motor; 53-aircraft support leg locking motor; 54-aircraft support leg locking mechanism 54; 55-first micro switch; 56-second micro switch; 57-altitude detection module; 58-support leg remote control module; 59-potentiometer; 6-flight control module; 7-camera.

It should be noted that, these accompanying drawings and text description are not to be construed as limitations to the conceptual scope of the present invention, and are rather for illustrating the concept of the present invention through reference to specific embodiments to a person skilled in the art.

### DETAILED DESCRIPTION OF THE EMBODIMENTS

To make the objects, technical solutions and advantages of the embodiments of the present invention clearer, the technical solutions of the embodiments are concisely and fully described with reference to the accompanying drawings of the embodiments below. The non-limiting embodiments are for illustrating the present invention and are not to be construed as limitations to the present invention.

In the description of the present invention, it should be noted that, the position indicative or position relation terms such as "top", "bottom", "front", "back", "left", "right", "perpendicular", "inner" and "outer" are based on the orientations or positions shown in the drawings, and are for better describe and keep the description of the present invention simple rather than explicitly or implicitly suggesting that the referred device or component needs to have a specific position and specific orientations and operations. Therefore, it is to be understood that the above terms do not form a limitation to the present invention.

In the description of the present invention, it should be noted that, unless particularly specified and defined, the terms such as "installed", "joined" and "connected" should be broadly interpreted; for example, fixedly connected, detachably connected or integrally connected, mechanically connected or electrically connected; or directly connected or connected through an intermediate medium. A person skilled in the art can understand the specific meanings of the above terms on the basis of specific conditions in the present invention.

According to the first aspect of the present invention, an aircraft support leg 2 is provided. The aircraft support leg 2 is movably connected to a main body of the aircraft. The aircraft support leg 2 can rotate to at least a first position and a second position. At the first position, an angle is between the aircraft support leg 2 and the main body of the aircraft; and at the second position, the aircraft support leg 2 substantially abuts against the main body of the aircraft or is at least partially arranged in the main body of the aircraft.

Specifically, the aircraft support leg 2 is rotatably connected to the main body of the aircraft. The term "rotatable" refers to the capability of rotating around a specific point or a specific axis at a specific two-dimensional plane, or rotating around a specific point in a three-dimensional space. The aircraft support leg 2 can rotate from the first position to the second position. At the first position, an included angle is between the aircraft support leg 2 and the main body of the aircraft, the aircraft support leg 2 is extended so as to support the main body of the aircraft at a specific height away and separate from the ground surface, and attached against each other, or the aircraft support leg 2 is located in the main body of the aircraft, in a way that the aircraft support leg 2 is directly accommodated in the main body of the aircraft, enveloped within a contour of the main body of the aircraft and stowed therein.

A common design of an aircraft usually adopts a form in which a central axis or a long axis is parallel to the horizontal plane or an acute angle exists between such central axis or long axis and the horizontal plane, wherein the central axis refers to a center line of the structural shape of an aircraft or an axis of a central extension line. Whether the aircraft is parallel to the horizontal direction or the value of the included angle can be determined through the central axis of the aircraft shape. When the difference in lengths of a long axis and a short axis of an aircraft is significant, it is easier to determine whether the aircraft is parallel to the horizontal direction or to determine the included angle therebetween through the long axis and the short axis. The long axis and the short axis are determined according to long and short directions of the specific shape of the aircraft; the direction of the longer side of the shape of the aircraft is the long axial direction, whereas the direction of the shorter side is the short axial direction. In the present invention, the central axis of the aircraft is more apparent, i.e., the long axis and the short axis can be clearly differentiated. The long axis of the aircraft of the present invention is perpendicular to the horizontal plane, that is, the long axis is the vertical direction and the short axis is the horizontal direction. The long axis of the main body of the aircraft is parallel to or coincides with the axis of center of gravity of the main body of the aircraft. A free end 212 of the aircraft support leg 2 has a degree of freedom in an angular change relative to the axis of center of gravity of the main body of the aircraft. An aircraft generally has an axis of center of gravity, and the long axis of the main body of the aircraft is provided parallel to the axis of center of gravity of thereof. Further, when the aircraft support leg 2 is at the second position, i.e., when stowed in the main body of the aircraft, a smaller structure in the lateral or horizontal direction can be formed, which helps reducing the space occupied by the aircraft. In addition, the flight state of the aircraft is not affected when the aircraft support leg 2 is extended. The aircraft support leg 2 can rotate around a connecting end 213 between the aircraft support leg 2 and the main body of the aircraft, wherein an included angle between the rotatable end - the free end 212, and the axis of center of gravity of the main body of the aircraft correspondingly changes, and the size of the included angle is determined by a rotation position of the aircraft support leg 2. A person skilled in the art should understand that, the free end 212 herein refers an end that generates a rotational displacement relative to the main body of the aircraft, e.g., a rocker mechanism, a link mechanism or a rotational secondary connection is adopted, to accomplish the rotation of the aircraft support leg 2 relative to the main body of the aircraft. Therefore, the aircraft support leg 2 at least includes the connecting end 213 and the free end 212; wherein, the aircraft support leg 2 may be a single rod or a connecting rod, the free end 212 may be single or plural in quantity, and the connecting end 213 at which the aircraft support leg 2 connects to the main body of the aircraft may be single or plural in quantity.

The aircraft support leg 2 rotates around the connection between the aircraft support leg 2 and the main body of the aircraft. At the first position, an angle from 0 degree to less than 90 degrees exists between a virtual extension line of the central axis of the aircraft support leg 2 and the axis of center of gravity of the main body of the aircraft. At the second position, the free end 212 of the aircraft support leg 2 is higher than the connecting end 213 between the aircraft support leg 2 and the main body of the aircraft. At the first position, the included angle between the central axis or the extension of the central axis of the aircraft and the axis of central of gravity of the main body of the aircraft is an acute angle. The central axis herein refers to a geometric center line of the shape of the aircraft; preferably, the included angle is between 30 degrees and 60 degrees. At the second position, the free end 212 of the aircraft is above the horizontal plane of the connecting end 213 and is stowed from bottom to top, so as to ensure that the aircraft support leg 2 is provided with good support when extended and abuts against the main body of the aircraft or stowed into the main body when stowed. Preferably, the aircraft support leg 2 is hinged with the main body of the aircraft, the aircraft support leg 2 includes the connecting end 213 and the free end 212, the aircraft support leg 2 is connected to the main body of the aircraft through the connecting end 213, and the free end 212 can rotate around the connecting end 213 in a specific plane. More preferably, the aircraft support leg 2 is hinged with the main body of the aircraft, the aircraft support leg 2 includes the connecting end 213 and the free end 212, the aircraft support leg 2 is connected to the main body of the aircraft through the connecting end 213, and the free end 212 can rotate around the connecting end 213 in a specific plane.

For benefits of flight mechanical balance of the aircraft and the overall structural esthetics of the aircraft, a cross section of the main body of the aircraft is a regular pattern axially symmetrical to the axis of center of gravity of the main body of the aircraft; preferably, the cross section of the main body of the aircraft is a convex polygon. The cross section of the main body of the aircraft is a symmetrical regular pattern, and the polygonal cross section of the main body ensures that the main body receives uniform circumferential forces and the gravitational force of the main body can be uniformly distributed on the structure, which is beneficial for force receiving and flight of the aircraft. A person skilled in the art should understand that, the convex polygon herein includes a structure consisting of a curve, i.e., including a planar pattern consisting of a straight line, an arc and a curve. From perspectives of geometry, dots form a line, lines form a plane, an arc is similarly formed by multiple dots connected together, and the connections between dots are straight lines. Therefore, an arc and a curve both consist of straight lines having infinitely small distances between any two dots, and the convex polygon includes a planar pattern consisting of curves.

The shape of the main body of the aircraft of the present invention is a smooth transitional closed curve enveloped surface. It should be understood that, a close curve enveloped surface is an enclosed structure surrounding the periphery of an axis of center of gravity. Further, adopting smooth transitional lines and planes connected together provides a more appealing overall structural streamline and conforms a hydromechanical structure for reducing wind resistance. The structure of such form may be a sphere, an ellipsoidal sphere, a part of a sphere, a part of an ellipsoidal sphere, or a structure or a part of a structure that satisfies the requirement of smooth transitional closed curve envelopment. Preferably, the shape of the main body of the aircraft is an ellipsoidal sphere having a long axial direction parallel to or coinciding with the axis of center of gravity of an unmanned aircraft and having a smooth closed curve enveloping surface, and the axis of center of gravity of the aircraft as an ellipsoidal sphere coincides with the long axis thereof to provide a more stable center of gravity thereof. Thus, during flight of the aircraft, rotation and speed variation operations of the aircraft can be more readily controlled. During the flight of the aircraft, since the long axis is the vertical center of gravity, the bottom part of the aircraft swings relative to the center of gravity or a specific point on the axis of the center of gravity. Further, due to the gravitational force of the aircraft itself, the aircraft is free from a situation of unstable center of gravity and hence from irregular motions of the aircraft.

When the aircraft support leg 2 is at the second position, the aircraft support leg 2 forms an appending, attaching or inclusive relationship with the main body of the aircraft. the groove or recess 214 adapted to the aircraft support leg 2, or the aircraft support leg 2 is at least partially arranged in the groove or recess 214 of the housing 1 of the main body of the aircraft. By configuring the groove or recess 214 at the housing 1 of the main body of the aircraft, the aircraft support leg 2 can be fitted in the groove 214, such that at least a part of the aircraft support leg 2 is located in the groove, which facilitates the stowing of leg pedals and effectively ensures that the position of the stowed aircraft support leg 2 is not shifted.

To enhance the matching of the aircraft support leg 2 at the second position, i.e., the stowed aircraft support leg 2, with the groove of the main body of the aircraft, one side portion of the aircraft support leg 2 has a smooth transitional curve close to the housing 1 of the main body of the aircraft. The groove or recess 214 entirely accommodate the aircraft support leg 2 when the aircraft support leg 2 is at the second position, such that the aircraft support leg 2 and the housing 1 of the main body of the aircraft jointly form a smooth transitional closed curve enveloped surface. When the aircraft support leg 2 is at the second position, the entire aircraft support leg 2 is located in the groove, and a part of the aircraft support leg 2 and the housing 1 of the main body of the aircraft jointly form an enveloped surface. As such, the stowed aircraft support leg 2 can be hidden in the housing 1 of the main body, thus reducing the space occupied, helping placement and fixation of the aircraft support leg 2, and at the same time rendering the appearance of the aircraft to be more complete and esthetically appealing.

When the aircraft support leg 2 is at the first position, i.e., at the extended position, in order to enable the aircraft support leg 2 to more stably support the main body of the aircraft, the aircraft support leg 2 has a locking mechanism, which is capable of maintaining the free end 212 of the aircraft support leg 2 to be lower than the connecting end 213 between the aircraft support leg 2 and the main body of the aircraft when the aircraft support leg 2 is at the first position. The free end 212 of the aircraft support leg 2 at the first position is located below the connecting end 213, and a locking mechanism is provided to fix the position of the aircraft support leg 2 and to increase the support stability of the aircraft support leg 2. Further, when an unmanned aircraft is not controlled such as not powered on, the aircraft support leg 2 can remain at the position, and the locking mechanism keeps the aircraft support leg 2 at a particular state.

An aircraft is provided according to a second aspect of the present invention. The aircraft includes a main body of the aircraft and an aircraft support leg 2 rotatably disposed thereon. A cross section of the main body of the aircraft is a closed curve. A first distance between a first point on the main body of the aircraft and an axis of center of gravity of the aircraft is different from a second distance between a second point on the main body of the aircraft and the axis of center of gravity of the aircraft.

More specifically, the aircraft includes the main body and the aircraft support leg 2. A cross section of the main body is a closed curve, and the aircraft at least satisfies the condition that a distance between a first point on the main body of the aircraft and the axis of center of gravity of the aircraft is different from a distance between a second point on the main body of the aircraft and the axis of center of gravity of the aircraft, given that at least two points having different distances from the axis of center of gravity exist on the main body of the aircraft. The rotation herein may be rotation around a specific point or a specific axis at a specific two-dimensional plane, or may be rotation around a specific point in a three-dimensional space. Preferably, the aircraft support leg 2 is hinged with the main body of the aircraft, the aircraft support leg 2 includes a connecting end 213 and a free end 212, the aircraft support leg 2 is connected to the main body of the aircraft through the connecting end 213, and the free end 212 can rotated around the connecting end 213 in a specific plane.

The cross section of the main body of the aircraft of the present invention is an axially symmetrical regular closed curve, cross sections of the main body of the aircraft along the axial direction of center of gravity of the aircraft are similar geometric shapes, the cross section of the main body is a closed curve, and the cross sections are connected in the axis of center of gravity to form a smooth curved surface. The axially symmetrical regular closed curve allows uniform forces applied upon the main body and provides an esthetical and coordinated appearance. Preferably, the cross section of the main body of the aircraft is a convex polygon. The convex polygon herein includes a structure consisting of a curve, i.e., including a planar pattern consisting of a straight line, an arc and a curve. From perspectives of geometry, dots form a line, lines form a plane, an arc is similarly formed by multiple dots connected together, and the connections between dots are straight lines. Therefore, an arc and a curve are both consist of straight lines having infinitely small distances between any two dots. More preferably, the cross section of the main body of the aircraft at the middle of the axis of center of gravity is the largest, and the cross section extended along the axis of center of gravity from the middle towards the two sides gradually reduces. Taking the middle of the axis of center of gravity of the main body of the aircraft as a dividing line, the cross section extended towards the two ends of the axis of center of gravity gradually reduces. As such, the area of the cross section at the middle of the axis of center of gravity is the largest, whereas the areas of the cross sections at the two ends of the axis of center of gravity are the smallest, forming the aircraft having a center of gravity at the middle of the main body and two smaller top and bottom ends.

The shape of the main body of the aircraft of the present invention is a partially ellipsoidal sphere or an ellipsoidal sphere having a long axis and a short axis and having a smooth closed curve enveloped surface, wherein the long axis coincides with the axis of center of gravity of the main body of the aircraft. When the long axis is parallel to the horizontal plane or almost parallel to the horizontal plane and the short axis is parallel to the axis of center of gravity or almost parallel to the axis of center of gravity, a shape similar to an airship is formed. When the long axis is parallel to the axis of center of gravity or almost parallel to the axis of center of gravity and the short axis is parallel to the horizontal plane or almost parallel to the horizontal plane, an egg-like shape is formed. Preferably, the long axis is parallel to or substantially parallel to the axis of center of gravity.

The aircraft support leg 2 is for supporting the main body of the aircraft, the aircraft support leg 2 includes the connecting end 213 connected to the main body and a free end 212, and the aircraft support leg 2 is rotatably disposed on the main body of the aircraft below the middle, i.e., 1/2, of the axis of center of gravity of the main body of the aircraft. The housing 1 of the main body of the aircraft has the groove or recess 214 at least partially adapted to the aircraft support leg 2 and configured along the central axial direction of the main body of the aircraft. The connecting end 213 of the aircraft support leg 2 can be rotatably provided at one end portion near the groove or recess 214. The free end 212 of the aircraft support leg 2 in one state can be stowed to be close to the other end portion of the groove or recess 214. The connecting end 213 is provided on the main body of the aircraft below the middle, i.e., 1/2, of the central axis of the main body of the aircraft. By providing the, thus providing the main body of the aircraft with reliable support. Further, when the aircraft support leg 2 is stowed, the aircraft support leg 2 can be stowed in the groove, providing the aircraft support leg 2 with simpler storage, and the stowed aircraft support leg 2 does not affect overall esthetics as the aircraft support leg 2 is located in the main body of the aircraft.

After the aircraft support leg 2 is stowed, to have the aircraft support leg 2 and the main body to form an integral appearance and provide a more appealing overall appearance, the aircraft support leg 2 has a smooth curve similar to the outer surface of the main body of the aircraft, so as to facilitate at least partially or entirely embedding the aircraft support leg 2 into the groove or recess 214 when the aircraft support leg 2 is in a stowed state. With the aircraft support leg 2 stowed in the groove, the almost smooth curved structure provides the aircraft support leg 2 with better coordination with the main body. Preferably, the aircraft support leg 2 is entirely embedded in the groove or recess 214 when the aircraft support leg 2 is in the stowed state, such that the aircraft support leg 2 is entirely located in the groove and only a part of the outer surface of the aircraft support leg 2 and the outer surface of the main body jointly form an integrated outer surface of the aircraft, providing a more appealing esthetical appearance.

An aircraft is generally installed with a camera 7 for a function such as aerial photographing. The camera 7 is installed at the bottom of the aircraft. When the free end 212 of the aircraft support leg 2 exceeds an end portion of the camera 7 and supports the aircraft, some parts of the aircraft support leg 2 may be located in a photographing field of view of the camera 7. To provide an unobstructed photographing field of view, when a threshold of a distance of the aircraft from a surface is greater than or equal to a predetermined value, the aircraft support leg 2 rotates around the connecting end 213, and the free end 212 of the aircraft support leg 2 moves out of the photographing field of view of the camera 7. When the aircraft is about to take off, the aircraft support leg 2 supports the aircraft on a surface. After the aircraft is airborne, when the altitude of the main body of the aircraft perpendicularly distanced from the surface reaches the predetermined value, the aircraft support leg 2 of the aircraft rotates around the connecting end 213, and the free end 212 of the aircraft support leg 2 moves out of the photographing field of view of the camera 7. When the aircraft support leg 2 is needed to provide the aircraft with support, the aircraft support leg 2 performs the aforesaid process in reverse, and re-enters the field of view of the camera 7 while providing the aircraft with support. The rotation adjustment function of the aircraft support leg 2 provides the aircraft with support and at the same time provides the camera 7 with a good photographing field of view, preventing the issues having to extend the camera 7 to a position farther from the aircraft support leg 2 in order to achieve a desired photographing field of view or horizontally extending the aircraft support leg 2 out of the photographing field of view of the camera, thus further preventing inconvenient storage caused by an overly large size of equipment of the aircraft.

A control method of an aircraft support leg is provided according to a third aspect of the present invention. The aircraft support leg 2 is rotatably disposed on or in a main body of the aircraft. The control method includes a step of stowing the aircraft support leg 2, wherein the step of stowing the aircraft support leg 2 is: controlling and rotating the aircraft support leg 2 from a first position, at which an angle is provided between the aircraft support leg 2 and the main body of the aircraft so as to support the aircraft to having a distance from a surface, to a second position, at which the aircraft support leg 2 is stowed and substantially abuts against a housing of the main body of the aircraft, or the aircraft support leg 2 is at least partially arranged in the housing of the aircraft.

More specifically, the aircraft support leg 2 serves as a component for supporting the main body of the aircraft. When the aircraft is airborne or when the aircraft is stored, the aircraft support leg 2 is stowed to facilitate the flight or storage process. When the aircraft support leg 2 supports the main body of the aircraft or is not completely stowed, an included angle is between the aircraft support leg 2 and the main body; alternatively speaking, an included angle is between the aircraft support leg 2 and the axis of center of gravity of the main body, i.e., the first position, and the aircraft support leg 2 substantially abuts against the housing of the main body of the aircraft or is at least partially arranged in the housing when the aircraft support leg 2 is stowed, i.e., the second position. The aircraft support leg 2 is rotated from the first position to the second position to accomplish stowing of the aircraft support leg 2.

After the aircraft support leg 2 is stowed, when the aircraft support leg 2 is at the second position, the free end 212 of the aircraft support leg 2 is controlled to be higher than the connecting end 213 between the aircraft support leg 2 and the main body of the aircraft, and the connecting end 213 to be located at the lower part of the main body. By rotating the connecting end 213, the free end 212 is stowed in the housing or abuts against the housing, thus preventing the connecting end 213 being disposed at a higher position, thus causing a situation where the aircraft support leg 2 being stowed but incapable of stably supporting the main body or the aircraft support leg 2 can stably support the main body but cannot be stowed in the housing.

The control method of the present invention further includes a step of controlling and extending the aircraft support leg 2. The extending step is extending from the second position to the first position, at which an included angle is between the aircraft support leg 2 and the aircraft main body so as to support the aircraft to having a distance from a surface. The extending step is a reverse operation of the above stowing step: the aircraft support leg 2 is rotated from the second position to the first position, at which the main body of the aircraft is supported on a specific surface, i.e., supporting the aircraft on the surface, and a distance spaces between the main body and the surface. Preferably, the surface is a planar surface or substantially a planar surface. More preferably, the aircraft support leg 2 is hinged with the main body of the aircraft, the aircraft support leg 2 includes the connecting end 213 and the free end 212, the aircraft support leg 2 is connected to the main body of the aircraft through the connecting end 213, and the free end 212 can rotate around the connecting end 213 in a specific plane.

The stowing or extension of the aircraft support leg 2 is controlled by predetermined commands. Before executing the step of extending the aircraft support leg 2, the control method further includes: determining a distance of the aircraft from a surface; and when a threshold of the distance of the aircraft from a surface is lower than or equal to the predetermined value, executing the step of controlling and extending the aircraft support leg 2. During the flight of the aircraft, before executing the extending step and issuing the command for controlling and extending the aircraft support leg 2 to mechanical control, the aircraft support leg 2 is still located at the second position. When the aircraft flies to a certain altitude, The critical value is defined as the threshold, and a predetermined altitude satisfying a condition for extending the aircraft support leg 2 is defined as the predetermined value. It should be noted that, the threshold and the predetermined value are merely two comparison reference values for triggering commands and they are not defined as specific terms, given that the object defined can be achieved.

When the aircraft support leg 2 supports the main body of the aircraft, i.e., when the aircraft support leg 2 is at the first position, non-periodical support of the aircraft support leg 2 is needed. Therefore, to ensure support stability and durability of the aircraft support leg 2, the control method of the present invention further includes a locking step, which is executed after the step of extending the aircraft support leg 2. In the locking step, a locking mechanism is controlled to lock the aircraft support leg 2 at the first position. With the locking mechanism provided, after completing the step of extending the aircraft support leg 2, the locking mechanism is triggered and enabled to secure and lock the position of the aircraft support leg 2 at the first position so as to keep the aircraft support leg 2 at that state. The locking mechanism herein is not limited to mechanical, electronic or other forms, given that fixing or locking the aircraft support leg 2 at the first position is satisfied. Preferably, mechanical locking is selected, and the aircraft can disconnect the power or disconnect the control on the aircraft support leg 2 after having locked the aircraft support leg 2.

When the locking mechanism is applied to the aircraft support leg 2 in the step of stowing the aircraft support leg 2, the locked state of the aircraft support leg 2 needs to be released, i.e., unlocked. The control method of the present invention further includes, before the step of stowing the aircraft support leg 2, a step of controlling and unlocking of the aircraft support leg 2. In the unlocking step, the aircraft support leg 2 is controlled to be unlocked from the first position, at which an angle is between the aircraft support leg 2 and the main body of the aircraft in order to support the aircraft to having a distance from a surface. The unlocking step is a reverse control process of the locking step, and controls the locking mechanism to unlock when the stowing step is needed, so as to stow the aircraft support leg 2 to release the aforementioned locking state.

After having stowed the aircraft support leg 2, i.e., when the aircraft support leg 2 is at the second position, the aircraft support leg 2 entirely abuts against the housing or is embedded in the housing; when the aircraft support leg 2 is at the second position, the aircraft support leg 2 is controlled to rotate and thus jointly forming a smooth closed curve enveloped surface with the housing 1 of the main body of the aircraft. When the aircraft support leg 2 is at the second position, the aircraft support leg 2 is controlled to rotate to be at least partially embedded in the groove or recess 214 configured on the housing 1 of the main body of the aircraft and along the direction of a central axis thereof, so as to jointly form a shape similar to a polygon, a circle or an ellipsoid with the housing 1 of the main body of the aircraft. A long axis of the ellipsoid is parallel to or coincides with the axis of center of gravity of the main body of the aircraft. It should be understood that, the closed curve enveloped surface is enclosed peripherally around the axis of center of gravity, and smooth transitional lines and planes connected to one another are adopted, such that a more appealing overall structural streamline is provided to conform to a hydromechanical structure for reducing wind resistance. The structure of such form may be a sphere, an ellipsoidal sphere, a part of a sphere, a part of an ellipsoidal sphere, or a structure or a part of a structure that satisfies the requirement of smooth transitional closed curve envelopment. The axis of center of gravity of the aircraft in form of an ellipsoid may coincide with the long axis thereof to provide a more stable center of gravity thereof. Thus, during flight of the aircraft, rotation and speed variation operations of the aircraft can be more readily controlled. During the flight of the aircraft, since the long axis is the vertical center of gravity, the bottom part of the aircraft swings relative to the center of gravity. Further, due to the gravitational force of the aircraft itself, the aircraft is free from a situation of unstable center of gravity and hence from irregular motions of the aircraft. When the aircraft support leg 2 is stowed in the groove, the almost similar smooth curved structure allows the aircraft support leg 2 to be more coordinated with the main body. Preferably, the aircraft support leg 2 is entirely embedded into the groove or recess 214 when the aircraft support leg 2 is in a stowed state to have the aircraft support leg 2 be entirely located in the groove, with only a part of the aircraft support leg 2 and the main body jointly forming an outer surface of the aircraft, providing a more appealing appearance.

A control method of an aircraft is provided according to a fourth aspect of the present invention. The aircraft includes a main body of the aircraft and an aircraft support leg 2 rotatably disposed on the main body of the aircraft. The control method of an aircraft includes following steps.

In step (1), the aircraft starts descending under the control of an energy storage component.

In step (2), during the process of landing and when landed, the aircraft support leg 2 is controlled to rotate from a second position, at which the aircraft support leg 2 is near the main body of the aircraft, to a first position, at which a virtual plane formed by a free end 212 of the aircraft support leg 2 is located at the bottom part of the main body of the aircraft, and a distance is between the two.

More specifically, the aircraft includes the aircraft support leg 2 and the main body. The aircraft support leg 2 is for supporting the main body. Before the aircraft lands from the air, the aircraft descends, and the aircraft support leg 2 rotates from the first position to the second position. The second position is a position at which the aircraft support leg 2 is near the main body of the aircraft, and the first position is a position at which the aircraft support leg 2 extends to form support in a specific plane and a distance exists between the main body of the aircraft and the plane. Preferably, the aircraft support leg 2 is not less than two in quantity, and is a structure having a free end 212 and a connecting end 213. The connecting end 213 is connected to the main body of the aircraft, and the free end 212 can rotate around the connecting end 213. More preferably, the connecting end 213 is hinged, and the aircraft support leg 2 is a single-rod structure.

Wherein, the aircraft support leg 2 is controlled to rotate from the second position, at which the aircraft support leg 2 substantially abuts against the main body of the aircraft or the aircraft support leg 2 is at least partially arranged in the main body of the aircraft, to the first position. Preferably, the aircraft support leg 2 is controlled to rotate from the second position, to the first position. The aircraft support leg 2 serves as a component for supporting the main body of the aircraft. During the flight of the aircraft or storage of the aircraft, the aircraft support leg 2 is stowed to facilitate the flight or storage process. When the aircraft support leg 2 supports the main body of the aircraft or is not completely stowed, an included angle is between the aircraft support leg 2 and the main body, or an included angle is between the aircraft support leg 2 and the axis of center of gravity of the main body, i.e., the first position, and the aircraft support leg 2 substantially abuts against the housing of the main body of the aircraft or is at least partially arranged in the housing when the aircraft support leg 2 is stowed, i.e., the second position. The aircraft support leg 2 is rotated from the first position to the second position to accomplish stowing of the aircraft support leg 2. The connecting end 213 is located at the lower part of the main body. By rotating the connecting end 213, the free end 212 is stowed in the housing or abuts against the housing, preventing the connecting end 213 being disposed at a higher position, thus causing a situation where the aircraft support leg 2 is stowed but is incapable of stably supporting the main body or the aircraft support leg 2 can stably support the main body but cannot be stowed in the housing.

The aircraft support leg is controlled to rotate from a second position, at which the aircraft support leg substantially abuts against the main body of the aircraft in form of a partially ellipsoidal sphere or an ellipsoidal sphere having a long axis and a short axis and having a smooth closed curve enveloped surface, or the aircraft support leg 2 is at least partially arranged in the main body of the aircraft in form of a partially ellipsoidal sphere or an ellipsoidal sphere having a long axis and a short axis and having a smooth closed curve enveloped surface, to the first position. When the long axis is parallel to the horizontal plane or almost parallel to the horizontal plane and the short axis is parallel to the axis of center of gravity or almost parallel to the axis of center of gravity, a shape similar to an airship is formed. When the long axis is parallel to the axis of center of gravity or almost parallel to the axis of center of gravity and the short axis is parallel to the horizontal plane or almost parallel to the horizontal plane, an egg-like shape is formed. Preferably, the long axis is parallel or substantially parallel to the axis of center of gravity.

It should be understood that, the closed curve enveloped surface is enclosed peripherally around the axis of center of gravity, and smooth transitional lines and planes connected to one another are adopted, such that a more appealing overall structural streamline is provided to conform to a hydromechanical structure for reducing wind resistance. The structure of such form may be a sphere, an ellipsoidal sphere, a part of a sphere, a part of an ellipsoidal sphere, or a structure or a part of a structure that satisfies the requirement of smooth transitional closed curve envelopment. Implementation details are given with reference to the accompanying drawings below.

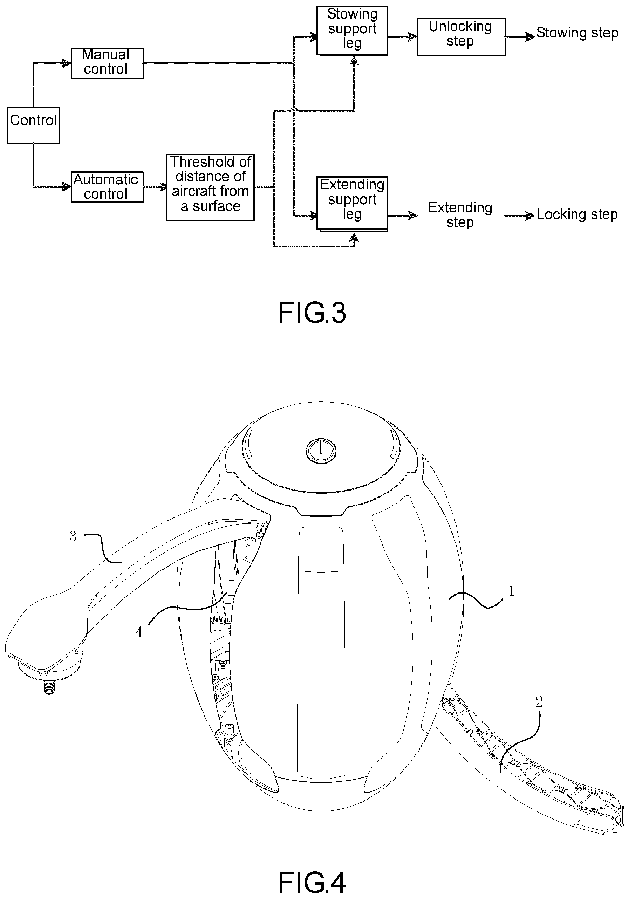

As shown in FIG. 4, the arm and the support leg are extended to perform flight operations and landing support when the aircraft in use, and the arm and support leg are stored in the housing of the arm when the aircraft is not in use. Further, the exposed cover plate of the arm and cover plate of the support leg and the entire housing jointly form an ellipsoid sphere when the arm and the support leg are stored, achieving protection over the internal devices, the arm and the support leg of the aircraft when the aircraft is not used, and at the same time reducing the storage space for the aircraft for placement of the aircraft in which the arm and the support leg are stored.

The aircraft includes a housing 1, an aircraft support leg 2, an arm 3, and a framework 4. The housing 1 is fixedly mounted on the framework 4 and has an outer enveloped surface appearing as a closed curve surface, and a support leg groove and an arm groove are provided at the housing 1. The aircraft support leg 2 is rotatably installed to the framework 4 at a position of the support leg groove. The aircraft support leg 2 has a degree of freedom of extending from the support leg groove to outside the housing 1 or stowing into the housing 1. The arm 3 is rotatably installed to the framework 4 at a position of the arm groove. The arm 3 has a degree of freedom of extending from the arm groove to outside the housing 1 or stowing into the housing 1.

In the embodiment of the present invention, the numbers of the aircraft support leg 2 and the support leg groove, and the numbers of the arm 3 and the arm groove are plural. The aircraft support leg 2 and the arm 3 are alternately arranged, and the support leg groove and the arm groove are alternately arranged. Further, the number of the aircraft support leg 2 is equal to the number of the arm 3, and the number of the support leg groove is equal to the number of the arm groove. Further, the numbers of the aircraft support leg 2, the arm 3, the support leg groove and the arm groove are four respectively.

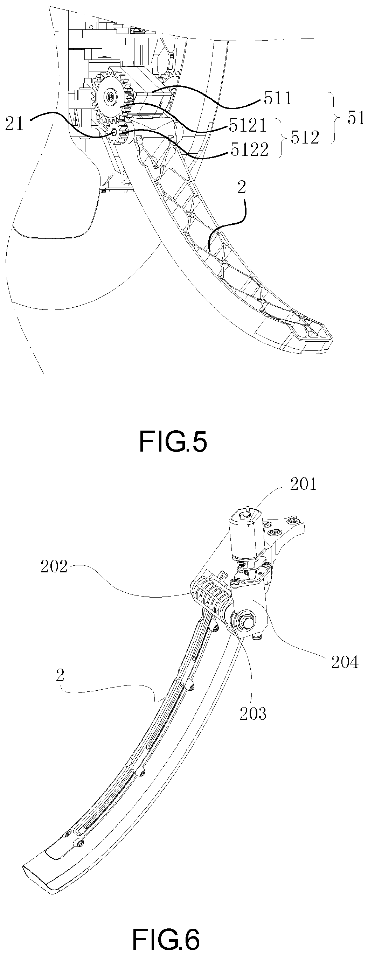

As shown in FIG. 5, a support leg drive mechanism 5 includes steering gear 511 and a gear set 512. The steering gear 511 is mounted on the framework 4 of the aircraft through a support leg mounting base. The gear set 512 is installed between the shaft of the steering gear 511 and an aircraft support leg rotation shaft 21, so as to control the extension and stowing of the aircraft support leg 2 under the actions of the steering gear 511.

The gear set 512 includes a first transmission gear 5121 and a second transmission gear 5122. The first transmission gear 5121 is installed at the shaft of the steering gear 511, so as to rotate along with the rotation of the shaft of the steering gear 511. The second transmission gear 5122 is installed at the aircraft support leg rotation shaft 21, and is engaged with the first transmission gear 5121. The second transmission gear 5122 is driven and rotated by the rotation of the first transmission gear 5121, so as to further control the extension and stowing of the aircraft support leg 2.

As shown in FIG. 6, the support leg drive mechanism includes a transmission mechanism, which is installed on the main body of the aircraft or on a fixed device connected to the main body to provide the transmission mechanism with a support base. The transmission mechanism includes a motor 201 and a worm gear worm shaft. The worm gear worm shaft includes a worm gear 203 and a worm shaft 204. The motor 201 is transmissionally connected to the worm shaft 204, the worm shaft 204 is transmissionally connected to the worm gear 203, and the worm gear 203 is connected on the aircraft support leg 2. The aircraft support leg 2 is rotatably connected on the main body or on a fixed part connected to the main body through a support leg rotation shaft 202 and can rotate around the support leg rotation shaft 202, and the power output source of the aircraft support leg 2 is the motor 201. The worm shaft 204 is driven by the motor 201 to further drive the worm gear 203, and the worm gear 203 then drives and extension and stowing control on the aircraft support leg 2.

A person skilled in the art should understand that, FIG. 5 and FIG. 6 depict merely a preferred implementation structure of a support leg drive mechanism of the present invention, and do not form specific limitations to the support leg drive mechanism of the present invention. Other transmission forms such as belt transmission and hinge transmission may also be adopted to achieve the objects of extension and stowing of the support leg in coordination with a control assembly.

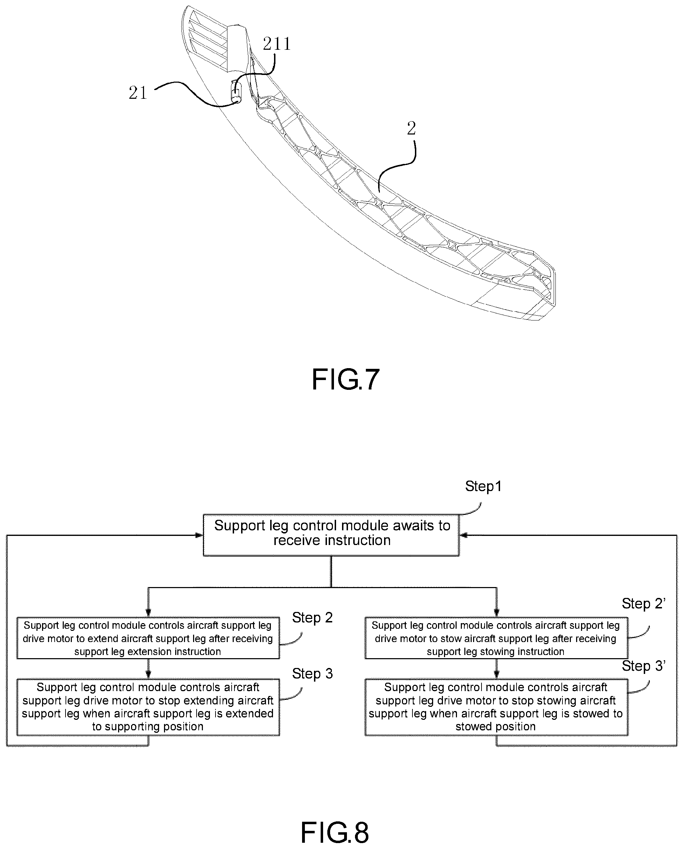

As shown in FIG.7 and with reference to FIG. 5, the support leg rotation shaft 21 of the aircraft is provided with a limiting surface 211. The second transmission gear 5122 limits rotation thereof relative to the support leg rotation shaft 21 of the aircraft through the limiting surface 211, thus enabling the aircraft support leg 2 to extend and stow along with the rotation of the second transmission gear 5122.

As shown in FIG. 8, the control method of an aircraft support leg of the present invention includes the following steps.

In step 1, a support leg control module awaits to receive an instruction, and step 2 or step 2' is selectively performed according to the received instruction.

In step 2, the support leg control module controls, after receiving a support leg extension instruction, an aircraft support leg drive motor to extend the aircraft support leg, followed by executing step 3.

In step 3, when the aircraft support leg is extended to a supporting position, the support leg control module controls the aircraft support leg drive motor to stop extending the aircraft support leg, following by returning to step 1.

In step 2', the support leg control module controls, after receiving a support leg stowing instruction, the aircraft support leg drive motor to stow the aircraft support leg, followed by executing step 3'.

In step 3', when the aircraft support leg is stowed to a stowed position, the support leg control module controls the aircraft support leg drive motor to stop stowing the aircraft support leg, followed by returning to step 1.

In the above control method of an aircraft support leg, step 2 to step 3 are an extension method of an aircraft support leg, and step 2' to step 3' are a stowing method of an aircraft support leg.

In the extension method of an aircraft support leg, after extending the aircraft support leg is stopped, i.e., after completing step 3 and before returning to step 1, the extension method of an aircraft support leg further includes step 4 below.

In step 4, the support leg control module controls an aircraft support leg locking motor to drive an aircraft support leg drive mechanism to lock the aircraft support leg at the supporting state, followed by returning to step 1.

In the stowing method of an aircraft support leg, after the support leg control module receives the support leg stowing instruction and before the aircraft support leg drive motor is controlled to stow the aircraft support leg (i.e., in step 2', after the support leg control module receives the support leg stowing instruction and before the aircraft support leg drive motor is controlled to stow the aircraft support leg), the stowing method of an aircraft support leg further includes a step of:

the support leg control module controls the aircraft support leg locking motor to drive the aircraft support leg locking mechanism to unlock the aircraft support leg.

In one embodiment of the present invention, final stop positions of extending and stowing the aircraft support leg are controlled by a micro switch installed at the framework of the aircraft. When the aircraft support leg is extended to the supporting position or stowed to the stowed position, the corresponding micro switch is exactly triggered, such that the triggered micro switch feeds a corresponding signal back to the support leg control module to indicate that the aircraft support leg is extended to the supporting position or is stowed to the stowed position, further triggering the support leg control module to send a termination signal to the aircraft support leg drive motor.

More specifically, in the control method of an aircraft support leg according to the embodiment of the present invention, in the extension method of an aircraft support leg, the support leg control module determines that the aircraft support leg is extended to the supporting position by using a feedback from a first micro switch triggered when the aircraft support leg is extended to the supporting position; in the stowing method of an aircraft support leg, the support leg control module determines that the aircraft support leg is stowed to the stowed position by using a feedback from a micro switch triggered when the aircraft support leg is stowed to the stowed position.

In another embodiment of the present invention, the final stop positions of the extending and stowing the aircraft support leg can be determined by a rotation button coaxially disposed with the shaft of the aircraft support leg drive motor and rotates synchronously with the shaft and a potentiometer having the rotation button. Because a change in the rotation angle of the rotation button of the potentiometer causes a change in the voltage outputted from the potentiometer, the output voltage of the potentiometer is in different values when the aircraft support leg is at the supporting position, at the stowed position, and at an intermediate position between the supporting position and the stowed position. Thus,

More specifically, in the control method of an aircraft support leg according to an embodiment of the present invention, in the extension method of an aircraft support leg, the support leg control module determines that the aircraft support leg is extended to the supporting position by using the feedback from the potentiometer when the aircraft support leg is extended to the supporting position; in the stowing method of an aircraft support leg, the support leg control module determines that the aircraft support leg is stowed to the stowed position by using the feedback from the potentiometer when the aircraft support leg is stowed to the stowed position.

Further, to implement automatic control of extending and stowing the aircraft support leg during the flight process of the aircraft, the control method of an aircraft support leg of the present invention further includes the following steps.

In step a, a flight altitude of the aircraft is detected.

In step b, when the flight altitude of the aircraft is lower than a predetermined altitude, an aircraft support leg extension instruction is sent to the support leg control module.

In step c, when the flight altitude of the aircraft is higher than the predetermined altitude, an aircraft support leg stowing instruction is sent to the support leg control module.

The range of the predetermined altitude may be set to any altitude value between 0.5 m and 5 m, e.g., 0.5 m, 1 m, 1.5 m, 2 m, 2.5 m, 3 m, 3.5 m, 4 m, 4.5 m and 5 m.

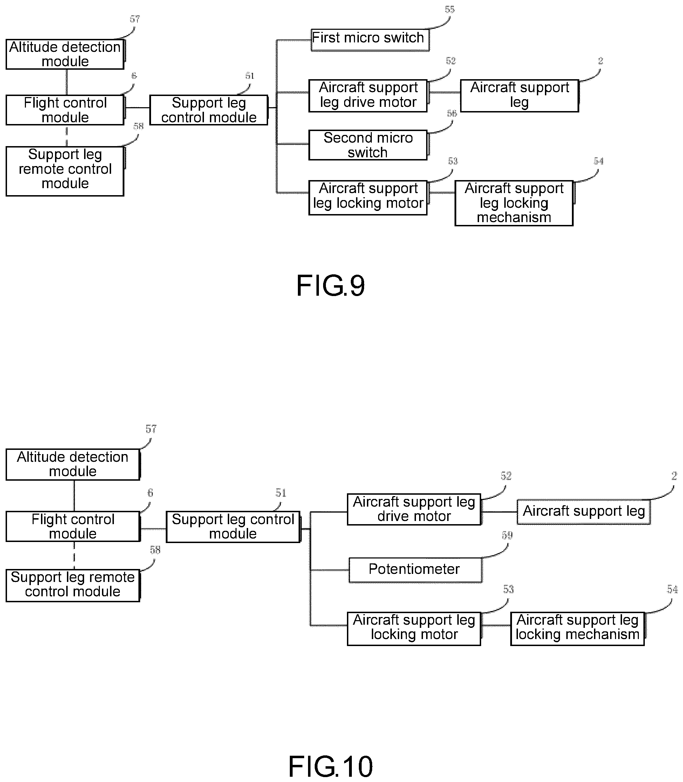

The present invention further provides an aircraft support leg control system. As shown in FIG. 9, the aircraft support leg control system includes a support leg control module 51 and an aircraft support leg drive motor 52. The support leg control module 51 controls, after receiving a support leg extension instruction, the aircraft support leg drive motor 52 to extend the aircraft support leg 2, and controls, when the aircraft support leg 2 is extended to the supporting position, the aircraft support leg drive motor 52 to stop extending the aircraft support leg 2. Further, the support leg control module 51 controls, after receiving a support leg stowing instruction, the aircraft support leg drive motor 52 to stow the aircraft support leg 2, and controls, when the aircraft support leg 2 is stowed to the stowed position, the aircraft support leg drive motor 52 to stop stowing the aircraft support leg 2. The aircraft support leg drive motor 52 is installed at the framework of the aircraft, and is for extending or stowing the aircraft support leg 2 under the control of the support leg control module 51.

Referring to FIG. 9, the aircraft support leg control system further includes an aircraft support leg locking motor 53 and an aircraft support leg locking mechanism 54. The support leg control module 51 further controls, after extending the aircraft support leg 2 is stopped, the aircraft support leg locking motor 53 to drive the aircraft support leg locking mechanism 54 to lock the aircraft support leg 2 at the supporting state. The aircraft support leg locking motor 53 further drives, under the control of the support leg control module 51, the aircraft support leg locking mechanism 54 to lock the aircraft support leg 2 at the supporting state.

The support leg control module 51 further controls, after receiving the support leg stowing instruction and before controlling the aircraft support leg drive motor 53 to stow the aircraft support leg 2, the aircraft support leg locking motor 53 to drive the aircraft support leg locking mechanism 54 to unlock the aircraft support leg 2. The aircraft support leg locking motor 53 further drives, under the control of the support leg control module 51, the aircraft support leg locking mechanism 54 to unlock the aircraft support leg 2.

Referring to FIG. 9, the aircraft support leg control system further includes a first micro switch 55. The first micro switch 55 is installed at the framework of the aircraft and is electrically connected to the support leg control module 51. When the aircraft support leg is extended to the supporting position, the aircraft support leg triggers the first micro switch 55, such that the first micro switch 55 sends a first feedback signal to the support leg control module 51. The support leg control module 51 determines, after receiving the first feedback signal, that the aircraft support leg is extended to the supporting position, and further sends an extension termination signal to the aircraft support leg drive motor 52.

The aircraft support leg control system further includes a second micro switch 56. The second micro switch 56 is installed at the framework of the aircraft and is electrically connected to the support leg control module 51. When the aircraft support leg is stowed to the stowed position, the aircraft support leg triggers the second micro switch 56, such that the second micro switch 56 sends a second feedback signal to the support leg control module 51. The support leg control module 51 determines, after receiving the second feedback signal, that the aircraft support leg is stowed to the stowed position, and further sends a stowing termination signal to the aircraft support leg drive motor 52.

In the embodiment of the present invention, referring to FIG. 9, the support leg extension instruction and the support leg stowing instruction are sent by a flight control module 6 of the aircraft. In the embodiment of the present invention, the aircraft support leg control system further includes an altitude detection module 57. The altitude detection module 57 detects a flight altitude of the aircraft, and sends the flight altitude of the aircraft to the flight control module 6. The flight control module 6 performs determination on the flight altitude of the aircraft. The flight control module 6 sends the support leg extension instruction to the support leg control module 51 when the flight altitude is lower than a predetermined altitude, and when the flight altitude of the aircraft is higher than the predetermined altitude.

Further, in the embodiment of the present invention, the aircraft support leg control system further includes a support leg remote control module 58. The support leg remote control module 58 sends in a remote controlled manner a support leg extension command and a support leg stowing command to the flight control module 6, wherein the support leg extension command and the support leg stowing command are not sent simultaneously. The flight control module 6 sends, after receiving the support leg extension command, the support leg extension instruction to the support leg control module 51, and sends, after receiving the support leg stowing command, the support leg stowing instruction to the support leg control module 51.

In the embodiment in FIG. 10, signal feedback is performed by using a potentiometer 59 in replacement of the first micro switch 55 and the second micro switch 56, so as to determine whether the aircraft support leg 2 is extended to the supporting position or is stowed to the stowed position. More specifically, the potentiometer 59 is installed at the framework of the aircraft, and a rotation button of the potentiometer 59 is coaxial with a shaft of the aircraft support leg drive motor 52 and the rotation button rotates synchronously with the shaft. The potentiometer 59 sends a third feedback signal to the support leg control module 51 when the aircraft support leg 2 is extended to the supporting position, and sends a fourth feedback signal to the support leg control module 51 when the aircraft support leg 2 is stowed to the stowed position. The support leg control module 51 determines, after receiving the third feedback signal, that the aircraft support leg 2 is extended to the supporting position, and determines, after receiving the fourth feedback signal, that the aircraft support leg 2 is stowed to the stowed position.

In addition to determining whether the aircraft support leg 2 is extended to the supporting position or is stowed to the stowed position by using the micro switches or the potentiometer, other means, such as a Hall element or an optic grating, may also be adopted to determine whether the aircraft support leg 2 is at the supporting position or the stowed position.

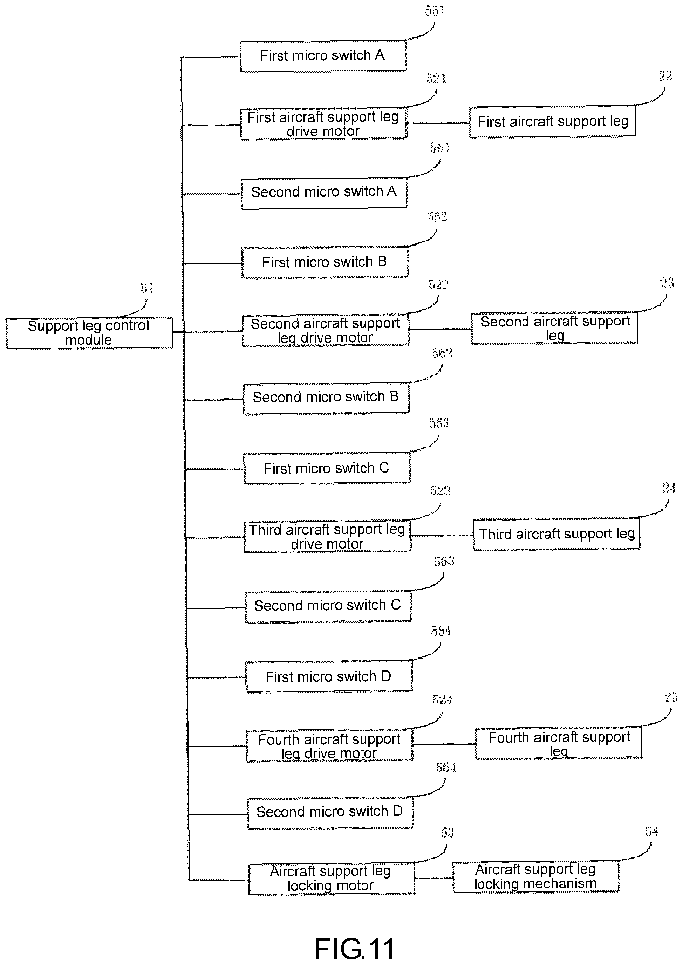

As shown in FIG. 11, the aircraft shown in FIG. 4 is applied in this embodiment, wherein the aircraft has four aircraft support legs (i.e., the aircraft support leg 2).

FIG. 11 shows a schematic diagram of an embodiment corresponding to a specific application of the embodiment in FIG. 9. In the embodiment in FIG. 11, there are a total of four aircraft support leg drive motors 52, which are respectively a first aircraft support leg drive motor 521, a second aircraft support leg drive motor 522, a third aircraft support leg drive motor 523 and a fourth aircraft support leg drive motor 524. These four aircraft support leg drive motors 52 respectively correspond to four aircraft support legs (a first aircraft support leg 22, a second aircraft support leg 23, a third aircraft support leg 24 and a fourth aircraft support leg 25) to respectively control the extension and stowing of the four aircraft support legs. That is, the first aircraft support leg drive motor 521 corresponds to the first aircraft support leg 22 to control the extension and stowing of the first aircraft support leg 22, the second aircraft support leg drive motor 522 corresponds to the second aircraft support leg 23 to control the extension and stowing of the second aircraft support leg 23, the third aircraft support leg drive motor 523 corresponds to the third aircraft support leg 24 to control the extension and stowing of the third aircraft support leg 24, and the fourth aircraft support leg drive motor 524 corresponds to the fourth aircraft support leg 25 to control the extension and stowing of the fourth aircraft support leg 25.

In the embodiment in FIG. 11, there are a total of four first micro switches 55, which are respectively a first micro switch A551, a first micro switch B552, a first micro switch C553 and a first micro switch D554. The four first micro switches 55 are all installed at the framework of the aircraft and are electrically connected to the support leg control module 51. The four first micro switches 55 respectively correspond to the four aircraft support legs 2. When any of the aircraft support leg 2 is extended to the supporting position, only the corresponding first micro switch 55 is triggered and feedback is transmitted to the support leg control module 51 through the corresponding first micro switch 55, such that the support leg control module 51 determines that the aircraft support leg 2 is extended to the supporting position and further sends the extension termination signal to the aircraft support leg drive motor 52 corresponding to the aircraft support leg 2.

In the embodiment in FIG. 11, there are a total of four second micro switches 56, which are respectively a second micro switch A561, a second micro switch B562, a second micro switch C563 and a second micro switch D564. The four second micro switches 56 are all installed at the framework of the aircraft and are electrically connected to the support leg control module 51. The four second micro switches 56 respectively correspond to the four aircraft support legs 2. When any of the aircraft support leg 2 is stowed to the stowed position, only the corresponding second micro switch 56 is triggered and feedback is transmitted to the support leg control module 51 through the corresponding second micro switch 56, such that the support leg control module 51 determines that the aircraft support leg 2 is stowed to the stowed position and further sends the stowing termination signal to the aircraft support leg drive motor 52 corresponding to the aircraft support leg 2.

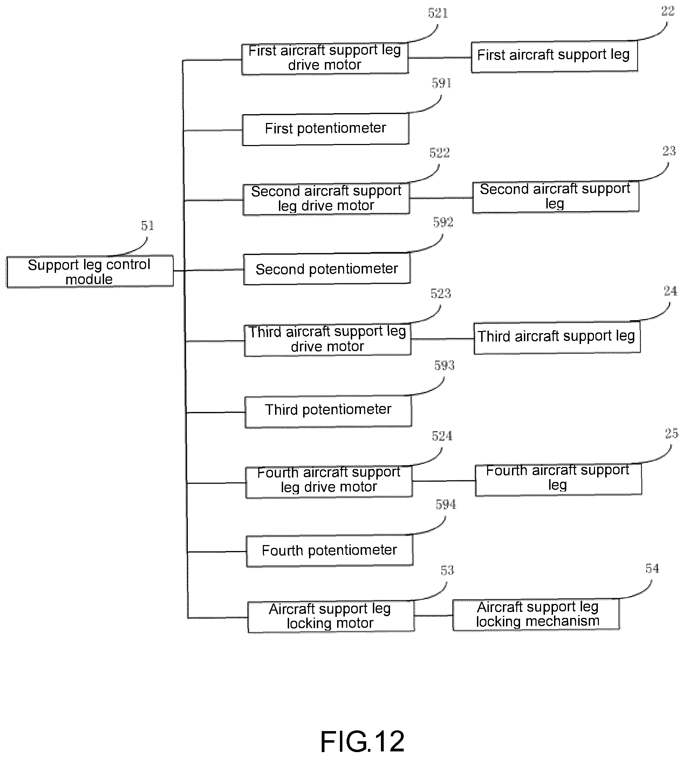

As shown in FIG. 12, same as that in FIG. 11, the aircraft in FIG. 4 is applied to the embodiment in FIG. 12, wherein the aircraft has four aircraft support legs (i.e., the aircraft support leg 2). FIG. 12 shows a schematic diagram of an embodiment corresponding to a specific application of the embodiment in FIG. 10. The embodiment in FIG. 12 differs from the embodiment in FIG. 11 is that, the embodiment in FIG. 12 performs signal feedback to determine whether the aircraft support leg 2 is extended to the supporting position or is stowed to the stowed position by using a potentiometer 59 in replacement of the first micro switch 55 and the second micro switch 56. In FIG. 12, there are four potentiometers 59, which are respectively a first potentiometer 591, a second potentiometer 592, a third potentiometer 593 and a fourth potentiometer 594. The four potentiometers 59 respectively correspond to the four aircraft support legs 2; that is, the first potentiometer 591 corresponds to the first aircraft support leg 22, the second potentiometer 592

An aircraft is further provided according to an embodiment of the present invention. The aircraft adopts the aircraft support leg control system of the above embodiments.

The aircraft support leg control method and system of the present invention achieve automatic extension and stowing of an aircraft support leg. From one aspect, because of the automatic extension and stowing, the aircraft support leg can be stored for easily storage when not in use, solving the problem of extension and stowing incapability of a fixed support leg of a current aircraft. From another aspect, when an aircraft is airborne, the aircraft support leg can be automatically stowed in a way that the stowed aircraft support leg does not protrude out of the main body of the aircraft, such that tasks such as aerial photographing and detection of the aircraft are not interfered. Further, as the present invention enables the aircraft support leg to be automatically extended, and further with the altitude feedback of an altitude detection module or remote control of a remote controller in the present invention, the aircraft is able to timely and automatically extend the aircraft support leg to the supporting position before landing, further providing reliable guarantee for stable support for landing of the aircraft.

The above descriptive details are merely preferred embodiments of the present invention and are not to be construed as limitations to the present invention in any form. Although the present invention is disclosed as in the above embodiments, these exemplary embodiments are not to be construed as limitations to the present invention. Without departing from the scope of the technical solutions of the present invention, any person skilled in the art can make on the basis of the teaching of the above technical contents some modifications or amendments to the embodiment into variation or equivalent embodiments. However, contents that do not depart from the technical solutions of the present invention and any simple modifications and equivalent changes and modifications made to the above embodiments on the basis of the technical substantiality of the present invention are to be encompassed within the scope of the solutions of the present invention.

## Claims

1. An aircraft support leg, wherein the aircraft support leg is movably connected to a main body of an aircraft, and the aircraft support leg is rotatable to at least a first position and a second position; wherein, at the first position, an angle is between the aircraft support leg and the main body of the aircraft, and at the second position, the aircraft support leg substantially abuts against the main body of the aircraft or the aircraft support leg is at least partially arranged in the main body of the aircraft.

2. The aircraft support leg according to claim 1, being characterized that:
a long axis of the aircraft main body is parallel to or coincides with an axis of center of gravity of the main body of the aircraft, and a free end of the aircraft support leg has a degree of freedom in an angular change relative to the axis of center of gravity of the main body of the aircraft.

3. The aircraft support leg according to claim 1, being characterized that:
at the first position, an angle from 0 degree to less than 90 degrees exists between a virtual extension line of a central axis of the aircraft support leg and an axis of center of gravity of the main body of the aircraft; and
at the second position, a free end of the aircraft support leg is higher than a connecting end between the aircraft support leg and the main body of the aircraft.

4. The aircraft support leg according to claim 1 or 2, being characterized that:
a cross section of the main body of the aircraft is a regular pattern axially symmetrical to an axis of center of gravity of the main body of the aircraft; preferably, the cross section of the main body of the aircraft is a convex polygon.

5. The aircraft support leg according to claim 4, being characterized that:
a shape of the main body of the aircraft is a smooth transitional closed curve enveloped surface; preferably, the shape of the main body of the aircraft is an ellipsoidal sphere having a long axial direction parallel to or coinciding with an axis of center of gravity of an unmanned aircraft and having a smooth closed curve enveloped surface.

6. The aircraft support leg according to any one of claims 1 to 5, being characterized that:
a housing of a main body of the aircraft has a groove or recess at least partially adapted to the aircraft support leg; preferably, the housing of the main body of the aircraft has a groove or recess adapted to the aircraft support leg, and the aircraft support leg is at least partially arranged in the groove or recess of the housing of the main body of the aircraft.

7. The aircraft support leg according to claim 6, being characterized that:
one side portion of the aircraft support leg has a smooth transitional curve close to the housing of the main body of the aircraft, and the groove or recess is capable of accommodating the aircraft support leg when the aircraft support leg is at the second position, such that the aircraft support leg and the housing of the main body of the aircraft jointly form the shape of the smooth transitional closed curve enveloped surface.

8. The aircraft support leg according to claim 1, being characterized that:
the aircraft support leg comprises a locking device capable of ensuring that a free end of the aircraft support leg is lower than a connecting end between the aircraft support leg and the main body of the aircraft when the aircraft support leg is at the first position.

9. An aircraft, comprising a main body of the aircraft and an aircraft support leg rotatably disposed thereon; wherein, a cross section of the main body of the aircraft is a closed curve, and a first distance between a first point on the main body of the aircraft and an axis of center of gravity of the aircraft is different from a second distance between a second point on the main body of the aircraft and the axis of center of gravity of the aircraft.

10. The aircraft according to claim 9, being characterized that:
a cross section of a main body of the aircraft is an axially symmetrical regular closed curve, the cross sections of the main body of the aircraft along a direction of an axis of center of gravity of the aircraft are similar geometric shapes; preferably, the cross section of the main body of the aircraft is a convex polygon; more preferably, the cross section of the main body of the aircraft at a middle of the axis of center of gravity of the aircraft is the largest, and the cross section extending along the axis of center of gravity from the middle towards two sides gradually reduces.

11. The aircraft according to claim 9 or 10, being characterized that:
a shape of the main body of the aircraft is a partially ellipsoidal sphere or an ellipsoidal sphere having a long axis and a short axis and having a smooth closed curve enveloped surface, and the long axis coincides with an axis of center of gravity of the main body of the aircraft.

12. The aircraft according to any one of claims 9 to 11, being characterized that:
the aircraft support leg is rotatably disposed on the main body of the aircraft below the middle, that is, 1/2, of the axis of center of gravity of the main body of the aircraft, and a housing of the main body of the aircraft has the groove or recess at least partially adapted to the aircraft support leg and configured along a central axial direction of the main body of the aircraft.

13. The aircraft according to claim 12, being characterized that:
a connecting end of the aircraft support leg is rotatably disposed at an end portion near the groove or recess, a free end of the aircraft support leg in a state can be stowed and be close to one other end portion of the groove or recess, and the connecting end is disposed on the main body of the aircraft below the middle, that is, 1/2, of the central axis of the main body of the aircraft.

14. The aircraft according to claim 13, being characterized that:
the aircraft support leg has a smooth curve similar to an outer surface of the main body of the aircraft, so as to facilitate the aircraft support leg to be at least partially or entirely embedded into the groove or recess when the aircraft support leg is in a stowed state.

15. A control method of an aircraft support leg, the aircraft support leg rotatably disposed on or in a main body of an aircraft, the control method comprises a step of controlling and stowing the aircraft support leg:
the step of stowing comprising controlling and rotating the aircraft support leg from a first position, at which an angle is between the aircraft support leg and the main body of the aircraft so as to support the aircraft to have a distance from a surface, to a second position, at which the aircraft support leg is stowed and substantially abuts against a housing of the main body of the aircraft, or the aircraft support leg is at least partially arranged in the housing of the aircraft.

16. The control method of an aircraft support leg according to claim 15, being characterized that:
controlling a free end of the aircraft support leg to be higher than a connecting end between the aircraft support leg and the main body of the aircraft when the aircraft support leg is at the second position.

17. The control method of an aircraft support leg according to claim 15, being **characterized in** further comprising a step of controlling and extending the aircraft support leg:
the step of extending comprising extending the aircraft support leg from the second position to the first position, at which the angle is between the aircraft support leg and the main body of the aircraft so as to support the aircraft to have the distance from the surface.

18. The control method of an aircraft support leg according to claim 17, being **characterized in**, prior to executing the step of extending the aircraft support leg, the control method further comprising:
performing determination on the distance of the aircraft from a surface, and executing the step of extending the aircraft support leg when a threshold of the distance of the aircraft from the surface is lower than or equal to a predetermined threshold.

19. The control method of an aircraft support leg according to claim 17 or 18, being **characterized in** further comprising a locking step subsequent to the executing the step of extending aircraft support leg, the locking step comprising:
controlling a locking mechanism to lock the aircraft support leg at the first position.

20. The control method of an aircraft support leg according to claim 19, being **characterized in** further comprising a step of controlling and unlocking the aircraft support leg before executing the step of stowing the aircraft support leg, the step of unlocking the aircraft support leg comprising:
controlling and unlocking the aircraft support leg from the first position, at which the angle is between the aircraft support leg and the main body of the aircraft so as to support the aircraft to have the distance from the surface.

21. The control method of an aircraft support leg according to claim 19 or 20, being characterized that:
controlling and rotating the aircraft support leg to jointly form a smooth closed curve enveloped surface with a housing of the main body of the aircraft when the aircraft support leg is at the second position.

22. The control method of an aircraft support leg according to claim 21, being characterized that:
when the aircraft support leg is at the second position, controlling and rotating the aircraft support leg and at least partially embedding the aircraft support leg in a groove or recess configured along a central axial direction on the housing of the main body of the aircraft, so as to jointly form a shape similar to a polygon, a circle or an ellipsoid with the housing of the main body of the aircraft, wherein a long axis of the ellipsoid is parallel to or coincides with an axis of center of gravity of the main body of the aircraft.

23. A control method of an aircraft, the aircraft comprising a main body of the aircraft and an aircraft support leg disposed thereon, the control method of an aircraft comprising steps of:
(1) the aircraft starting to descend under control of an energy storage component;
(2) during the process of landing and when landed, controlling the aircraft support leg to rotate from a second position near the main body of the aircraft to a first position; wherein, at the first position, a virtual plane formed by a free end of the aircraft support leg is located at a bottom part of the main body of the aircraft, and a distance spaces between the two.

24. The control method of an aircraft according to claim 23, wherein the aircraft support leg is controlled to rotate from the second position, at which the aircraft support leg substantially abuts against the main body of the aircraft or the aircraft support leg is at least partially arranged in the main body of the aircraft, to the first position; preferably, the aircraft support leg is controlled to rotate from the second position, at which a free end of the aircraft support leg is higher than a connecting end between the aircraft support leg and the main body of the aircraft and/or the free end of the aircraft support leg is higher than a bottom part of the main body of the aircraft, to the first position.

25. The control method of an aircraft according to claim 24, wherein the aircraft support leg is controlled to rotate from the second position, at which the aircraft support leg substantially abuts against the main body of the aircraft in form of a partially ellipsoidal sphere or an ellipsoidal sphere having a long axis and a short axis and having a smooth closed curve enveloped surface, or the aircraft support leg is at least partially arranged in the main body of the aircraft in form of a partially ellipsoidal sphere or an ellipsoidal sphere having a long axis and a short axis and having a smooth closed curve enveloped surface, to the first position.
